# NEUE EUROPÄISCHE PATENTSCHRIFT

(11) **EP 2 330 023 B2**
(45) Veröffentlichungstag und Bekanntmachung des Hinweises auf die Entscheidung über den Einspruch: **13.07.2022**
(45) Hinweis auf die Patenterteilung: 27.03.2013
(21) Anmeldenummer: 09014068.2
(22) Anmeldetag: 10.11.2009
(51) Int. Cl.: B62D 33/04, B60J 5/06

(54) **Planenaufbau eines Nutzfahrzeugs**
Tarpaulin cover for a commercial vehicle
Structure de bache pour un véhicule utilitaire

(43) Veröffentlichungstag der Anmeldung: 08.06.2011
(73) Patentinhaber: Schmitz Cargobull AG, 48341 Altenberge (DE)
(72) Erfinder: von der Stein, Lucas, 48167 Münster (DE); Derks, Roger Geradus Christiaan, 5922 XT Venlo (NL)
(74) Vertreter: Cohausz & Florack

(56) Entgegenhaltungen:
- EP-A2- 0 925 975
- WO-A1-2005/092651
- DE-A1- 10 020 343
- DE-A1- 10 131 660
- DE-U1- 29 608 103
- DE-U1-202006 003 548
- GB-A- 2 071 582
- GB-A- 2 145 759
- GB-A- 2 174 136

## Beschreibung

Die Erfindung betrifft einen Planenaufbau eines Nutzfahrzeugs, vorzugsweise eines Lastkraftwagens, Anhängers oder Aufliegers, mit einer Rahmenkonstruktion und wenigstens einer seitlich an einer Längsseite der Rahmenkonstruktion angebrachten Planeneinheit, wobei die Rahmenkonstruktion wenigstens eine Eckrunge und wenigstens einen Längsholm aufweist, die in einem Eckbereich der Rahmenkonstruktion miteinander verbunden sind, wobei die Planeneinheit zwischen einer geöffneten Stellung und einer geschlossenen Stellung am Längsholm gehalten ist und wobei die Planeneinheit in der geschlossenen Stellung mit der Eckrunge verbindbar ausgebildet ist.

Nutzfahrzeugen der genannten Art sind insbesondere Fahrzeuge für den Straßenverkehr, die vornehmlich für den Transport von stückigen oder stückig verpackten Gütern eingesetzt werden. Für derartige Nutzfahrzeuge kommen Planenaufbauten unterschiedlicher Ausgestaltung zum Einsatz. Deren Planeneinheiten sind an den Längsseiten angebracht und dienen dem Verschließen der Längsseiten des Planenaufbaus bzw. der Öffnungen an den Längsseiten der Rahmenkonstruktion. Die Planenaufbauten sind wegen der Planeneinheiten regelmäßig leichter als Nutzfahrzeugaufbauten mit festen Wänden. Außerdem können die Planenaufbauten auch von einer Längsseite beladen und entladen werden.

Die Rahmenkonstruktion aus Eckrungen und Dachholmen dient zur Stabilisierung der Planenaufbauten. Typischerweise umfasst die Rahmenkonstruktion vier Eckrungen, von denen jeweils zwei Eckrungen am vorderen und am hinteren Ende des Planenaufbaus auf einander gegenüberliegenden Seiten angeordnet sind. Die Eckrungen sind mit dem Ladeboden des Nutzfahrzeugs und den Längsholmen des Planenaufbaus verbunden, wobei direkte und indirekte Verbindungen möglich sind. Zwischen den Eckrungen können insbesondere an den Längsseiten weitere Rungen vorgesehen sein, die jedoch meist zum Be- und Entladen demontiert werden können.

Planenaufbauten dieser Art werden auch als Curtainsidcr oder Schiebeplanenaufbauten bezeichnet. Bei diesen Planenaufbauten kann eine Seitenplane entlang eines Längsholms zum Be- und Entladen auf- und zugezogen werden. Zu diesem zweck ist die Planeneinheit neben einer Plane mit Mitteln zum Befestigen der Plane am Längsholm und den beiden Eckrungen der Rahmenkonstruktion versehen. Bei Schiebeplanenaufbauten oder Curtainsider-Aufbauten sind meist beide Längsseiten in gleicher Weise ausgebildet, so dass der Planenaufbau von beiden Längsseiten leicht beladen werden kann.

Die Planenaufbauten der genannten Art wie z.B. DE 2 9608103 U und DE 202006003548 U können nur bedingt gegenüber einem unerwünschten Zugriff in den Laderaum gesichert werden. Es besteht daher die Gefahr einer Manipulation der Ladung des Nutzfahrzeugs. Entsprechende Nutzfahrzeuge werden folglich von Zollbehörden nicht oder nur eingeschränkt für den sogenannten zollsicheren Warentransport über Ländergrenzen hinweg zugelassen. Bei einem zollsicheren Warentransport soll nämlich ausgeschlossen sein, dass nach einem ordnungsgemäßen Verschließen des Planenaufbaus, etwa durch sogenanntes Verplomben desselben, der Nutzfahrzeugaufbau nicht mehr geöffnet und wieder verschlossen werden kann, ohne dabei sichtbare Spuren zu hinterlassen. Dabei soll jeglicher Zugang zum Laderaum verhindert werden, der unerkannt bleiben würde.

Ähnliche Anforderungen werden zunehmend auch an den Transport teurer oder sicherheitsrelevanter Güter gestellt, selbst wenn bei diesem keine Zollgrenzen überschritten werden. Es kann so nämlich einfach überprüft werden, ob die Ladung so wie versendet beim Abnehmer ankommt oder während des Transports manipuliert worden ist.

Es sind bereits Maßnahmen bekannt, um einzelne Bereiche eines Planenaufbaus vor einem unerkannt bleibenden Zugriff in den Planenaufbau zu sichern, beispielsweise aus der GB2 174 136A und der EP0 925 975A2. Dies gilt bei Planenaufbauten der genannten Art, wie etwa Schiebeplanenaufbauten, jedoch nicht in zufriedenstellender Weise für Eckbereiche zwischen einem Längsholm und einer Eckrunge. In diesen Eckbreichen kann die Plane nach außen gezogen werden, wodurch eine Öffnung zum Eingreifen in das Innere des Planenaufbaus entsteht. Die Plane kann in diesen Eckbreichen nämlich nicht ohne weiteres so stramm gezogen oder durch andere Mittel gesichert werden, dass ein Eingreifen in den Planenaufbau unterhalb der Plane sicher verhindert wird.

Daher liegt der Erfindung die Aufgabe zugrunde, einen Planenaufbau eines Nutzfahrzeugs der eingangs genannten und zuvor näher beschriebenen Art derart auszugestalten und weiterzubilden, dass der Eckbereich des Planenaufbaus gegen einen nachträglich nicht mehr erkennbaren Eingriff von außen gesichert ist.

Diese Aufgabe ist durch einen Planenaufbau gemäß Anspruchs 1

Es ist also ein Aussteifungselement vorgesehen, das jedenfalls in geschlossener Stellung der Planeneinheit in einem Eckbereich der Rahmenkonstruktion angeordnet ist. Die geschlossene Stellung wird von der Planeneinheit dann eingenommen, wenn der Planenaufbau an der entsprechenden Längsseite verschlossen ist. Das Innere des Planenaufbaus ist von dieser Längsseite dann nicht mehr zugänglich. Die Öffnung der Rahmenkonstruktion an der entsprechenden Längsseite ist durch die Planeneinheit im Wesentlichen vollständig abgedeckt ist. Bei einem Schiebeplanenaufbau ist die Planeneinheit in der geschlossenen Stellung zugezogen und vorzugsweise über entsprechende Mittel an wenigstens einer Eckrunge der Längsseite der Rahmenkonstruktion verriegelt. Die wenigstens eine Eckrunge ist dabei vorzugsweise am vorderen oder am hinteren Ende der Längsseite bezogen auf den Planenaufbau angeordnet.

In der geschlossenen Stellung der Planeneinheit wird durch das Aussteifungselement verhindert, dass die Plane im entsprechenden Eckbereich nach außen gezogen und durch die so entstehende Auswölbung der Plane in das Innere des Planenaufbaus eingegriffen werden kann, ohne dabei sichtbare Beschädigungen am Planenaufbau, insbesondere am Aussteifungselement, zu hinterlassen. Das Aussteifungselement muss also eine erhöhte Biegesteifigkeit aufweisen, damit es einem Eingriff von außen einen entsprechenden Widerstand entgegensetzt.

Das Aussteifungselement muss allerdings nicht so biegesteif sein, dass ein solcher Eingriff sicher verhindert werden kann. Es ist ausreichend, wenn das Aussteifungselement so biegesteif ist, dass ein Eingriff nur unter Beschädigung des Aussteifungselements und/oder übriger Teile der Planeneinheit erfolgen kann. Diese Beschädigung sollte nach dem erfolgten Eingriff sichtbar bleiben und nicht ohne weiteres behoben werden können. Als Beschädigung des Aussteifungselements kommt in diesem Zusammenhang insbesondere eine bleibende Deformation des Aussteifungselements in Frage.

Zudem soll das Aussteifungselement mit der Planeneinheit aus der verschlossenen Stellung in die geöffnete Stellung gebracht werden können. Unter der geöffneten Stellung wird dabei eine Stellung verstanden, in der die Planeneinheit nicht im Wesentlichen die gesamte entsprechende Seite des Planenaufbaus und/oder der Rahmenkonstruktion verschließt, sondern einen Zugang zum Inneren des Planenaufbaus von der entsprechenden Längsseite her durch die dortige Öffnung in der Rahmenkonstruktion erlaubt. Der Zugang zum Inneren des Planenaufbaus ist dabei ausreichend, um ein Be- und Entladen des Planenaufbaus zu ermöglichen. In der geöffneten Stellung der Planeneinheit muss die Öffnung der entsprechenden Längsseite der Rahmenkonstruktion allerdings nicht vollständig für das Be- und Entladen freigegeben sein, wenngleich dies vorgesehen sein kann.

Das Aussteifungselement verharrt nicht im Eckbereich der Rahmenkonstruktion, wenn die Planeneinheit von der geschlossenen in die geöffnete Stellung gebracht wird. Ansonsten könnte das Aussteifungselement das Be- und Entladen des Planenaufbaus behindern. Das Aussteifungselement wird vielmehr mit der Planeneinheit aus dem Eckbereich der Rahmenkonstruktion entfernt.

Dabei sind am oberen Ende der Planeneinheit Längsholmverbindungsmittel vorgesehen. Über diese Längsholmverbindungsmittel, die in der geschlossenen Stellung der Planeneinheit vorzugsweise etwa regelmäßig entlang des Längsholms verteilt angeordnet sind, wird die Plane der Planeneinheit am Längsholm gehalten. Zum Verschließen der entsprechenden Längsseite des Planenaufbaus mit der Planeneinheit ist an wenigstens einem seitlichen Ende derselben ein Eckrungenverbindungsmittel zur Verbindung mit einer Eckrunge vorgesehen. In diesem Fall ist das Aussteifungselement in einem Bereich zwischen den Längsholmverbindungsmitteln und dem Eckrungenverbindungsmittel vorgesehen. Dieser Bereich ist besonders anfällig gegenüber einem Eingriff von außen in den Planenaufbau, da zwischen dem Eckrungenverbindungsmittel und den Längsholmverbindungsmitteln aus konstruktiven Gründen ein gewisser Mindestabstand einzuhalten ist.

An wenigstens einem seitlichen, d.h. bezogen auf den Planenaufbau vorderen und/oder hinteren, Ende der Planeneinheit können auch mehrere Eckrungenverbindungsmittel vorgesehen sein. Dann sollte das Aussteifungselement vorzugsweise in einem Bereich zwischen dem äußersten Eckrungenverbindungsmittel und dem äußersten Längsholmverbindungsmittel vorgesehen sein, die jeweils benachbart zu dem entsprechenden Eckbereich angeordnet sind.

Die Längsholmverbindungsmittel sind als entlang des Längsholms geführte Schlitten ausgebildet, die voneinander beabstandet sein können. Die Planeneinheit kann so an der entsprechenden Längsseite ähnlich eines Vorhangs auf und wieder zugezogen werden. Man spricht in diesem Zusammenhang auch von einem Schiebeplanenaufbau oder einem Curtainsider-Aufbau. Das Eckrungenverbindungsmittel ist als Spannstange ausgebildet. Diese kann beispielsweise in die Rahmenkonstruktion, vorzugsweise in die Eckrunge, eingehängt werden. In dieser oder einer anderen Position kann die Sperrstange zum Spannen der Plane der Planeneinhcit um die eigene Achse gedreht werden. Das Aussteifungselement befindet sich dabei im Bereich zwischen dem in Bezug auf den Eckbereich äußersten Schlitten und der Spannstange. Auf diese Weise kann der entsprechende Eckbereich gegen ein unbefugtes und unbemerktes Eingreifen von außen gesichert werden.

Das Aussteifungselement kann, senkrecht zur Längsseite gesehen, den Längsholm und/oder die Eckrunge abschnittsweise überlappend angeordnet sein. Dann kann nicht oder kaum zwischen dem Aussteifungselement und der Eckrunge bzw. dem Längsholm in den Planenaufbau eingegriffen werden. Außerdem kann das Aussteifungselement beim Spannen der Plane abschnittsweise zwischen die Plane und den Längsholm und/oder die Eckrunge gelangen, wodurch der Eckbereiche noch zusätzlich ausgesteift wird.

Das Aussteifungselement kann ortsfest an einer Plane der Planeneinheit vorgesehen sein, insbesondere in einem Eckbereich der Plane befestigt sein. Auf diese Weise wird sichergestellt, dass das Aussteifungselement in der geschlossenen Stellung der Planeneinheit am gewünschten Ort positioniert wird. Zudem kann so einfach vermieden werden, dass das Aussteifungselement in der geöffneten Stellung den Be- oder Entladevorgang behindert, etwa weil es die Öffnung der entsprechenden Seite der Rahmenkonstruktion verkleinert. Die Befestigung kann in konstruktiv einfacher Weise beispielsweise durch Kleben, Nieten, Schrauben, Klemmen, Nähen oder in Kombinationen hiervon erfolgen.

Das Aussteifungselement kann im Wesentlichen unsichtbar und unzugänglich auf der Innenseite der Planeneinheit vorgesehen sein. Das Aussteifungselement kann aber auch an der Außenseite der Planeneinheit vorgesehen sein, so dass eine etwaige Deformation als Folge einer Manipulation der Ladung leichter erkennbar ist. In einem Eckbereich der Rahmenkonstruktion können auch zwei oder mehrere Aussteifungselemente vorgesehen sein, und zwar bedarfsweise auf unterschiedlichen Seiten der Planeneinheit.

Alternativ oder zusätzlich kann das Aussteifungselement ortsfest am Eckrungenverbindungsmittel befestigt sein. Dies kann zu einer zusätzlichen Aussteifung beitragen. Dabei ist es bevorzugt, wenn das Aussteifungsmittel in der geschlossenen Stellung der Planeneinheit im Wesentlichen parallel zur Plane seitlich vom Eckrungenverbindungsmittel absteht. Ist die Plane nicht mit dem Aussteifungselement verbunden, kann die Plane grundsätzlich im Eckbereich nach außen gezogen werden, wo jedoch das Aussteifungselement ein unentdecktes Eingreifen in den Planenaufbau verhindert. Dies ist umso mehr der Fall, wenn das Aussteifungselement an einem äußeren, insbesondere dem Eckbereich zugewandten, Bereich des Eckrungenverbindungsmittels angebracht ist. Das Aussteifungselement kann zudem so angebracht sein, dass es beim Spannen der Plane abschnittsweise zwischen die Plane und den Längsholm und/oder die Eckrunge gelangt. So wird das Eingreifen in den Planenaufbau weiter erschwert.

Bei einer anderen Ausgestaltung der Planeneinheit ist das oder ein weiteres Aussteifungselement an einem Längsholmverbindungsmittel befestigt. Das Aussteifungselement wird auch dann vom Längsholmverbindungsmittel gehalten, wenn sich die Planeneinheit in geöffneter Stellung befindet. Eine Verbindung zwischen Aussteifungselement und Plane ist entbehrlich. Das Aussteifungselement ist aus konstruktiven Gründen vorzugsweise an einem äußeren Längsholmverbindungsmittel vorgesehen, das dem entsprechenden Eckbereich bzw. der entsprechenden Eckrunge zugewandt ist.

In diesem Zusammenhang bietet es sich an, wenn das Aussteifungsmittel in der geschlossenen Stellung der Planeneinheit vom Längsholmverbindungsmittel, insbesondere im Wesentlichen parallel zur Plane, nach unten und in den Eckbereich absteht. So wird das Schließen der Planeneinheit nicht erschwert.

Vorzugsweise sind an wenigstens einer Längsseite der Rahmenkonstruktion zwei Eckrungen vorgesehen, die in einander gegenüberliegenden Eckbereichen mit dem Längsholm verbunden sind. Die Eckrungen befinden sich dann vorzugsweise am vorderen und/oder hinteren Ende der entsprechenden Längsseite des Planeaufbaus. Die Planeneinheit kann in der geschlossenen Stellung an gegenüberliegenden Enden mit den beiden Eckrungen verbindbar ausgebildet sein, wobei die Planeneinheit wenigstens zwei Aussteifungselemente aufweist, die mit der Planeneinheit in die geöffnete Stellung bringbar und in der geschlossenen Stellung der Planeneinheit in dem einander gegenüberliegenden Eckbereichen der Rahmenkonstruktion angeordnet sind. Auf diese Weise kann an beiden seitlichen Enden einer Planeneinheit jeweils wenigstens ein Aussteifungselement vorgesehen sein. Dies bietet sich insbesondere bei Planeneinheiten an, die an beiden seitlichen Enden geöffnet werden können, so dass die Planeneinheit aus der geschlossenen Stellung an beiden seitlichen Enden in eine geöffnete Stellung gebracht werden kann. Dazu kann beispielsweise die Verbindung zwischen der Planeneinheit und einer der beiden seitlichen Eckrungen getrennt werden. Die Planeneinheit kann je nach Führung derselben am Längsholm, bedarfsweise von der entsprechenden Eckrunge her, durch Aufschieben oder dergleichen geöffnet werden. So wird letztlich eine erhöhte Flexibilität für das Be- und Entladen erreicht, ohne dass die Möglichkeit eines Eingriffs in den Planenaufbau an einer der beiden Eckbereiche zwischen dem Längsholm und den beiden Eckrungen besteht, der unerkannt bleibt.

Bei dem Planenaufbau können die Längsseiten mit gleichartigen oder unterschiedlichen Planeneinheiten gemäß einer oder mehrerer der zuvor beschriebenen Ausführungsformen versehen sein. Die Rahmenkonstruktion kann dazu an beiden Längsseiten jeweils eine Planeneinheit, wenigstens eine Eckrunge und einen Längsholm aufweisen, wobei jede Eckrunge mit wenigstens einem Längsholm in einem Eckbereich der Rahmenkonstruktion verbunden ist. Jede Planeneinheit kann dann wenigstens ein Aussteifungselement aufweisen, das mit der Planeneinheit in die geöffnete Stellung bringbar und in der geschlossenen Stellung der Planeneinheit im entsprechenden Eckbereich der Rahmenkonstruktion angeordnet ist. Auf diese Weise können beide Längsseiten des Planenaufbaus gegenüber einem unerkannten Eingreifen in den Planenaufbau gesichert werden. Dies gilt unabhängig davon, ob die beiden Planeneinheiten identisch oder unterschiedlich ausgebildet sind.

Grundsätzlich wäre es möglich, die Stirnwand und/oder die Rückwand des Planenaufbaus mit einer der zuvor beschriebenen Ausführungsformen der Planeneinheit auszustatten. Bei dem Dachholm wird es sich dann bevorzugt um einen Querholm handeln, der über wenigstens einen Eckbereich mit einer Eckrunge verbunden ist, die vorzugsweise mit der Eckrunge einer angrenzenden Seitenwand identisch ist. Das wenigstens eine Aussteifungselement ist dann in der geschlossenen Stellung der Planeneinheit der Rückwand und/oder der Stirnwand in wenigstens einem der Eckbereiche zwischen wenigstens einer Eckrunge und dem Querholm angeordnet. Eine Be- und Entladung des Planenaufbaus über die Stirnwand kommt jedoch nur in Ausnahmefällen in Frage. Zudem werden die Rückwände von Planenaufbauten üblicherweise durch Rückwandtüren verschlossen. Die Planeneinheiten der zuvor beschriebenen Arten werden daher vorzugsweise ausschließlich an den Längsseiten der Planenaufbauten vorgesehen. Die Planen der Planeneinheiten werden deshalb auch als Seitenplanen bezeichnet.

Das Aussteifungselement kann aus Metall, vorzugsweise aus Blech, insbesondere aus einem Stahlblech, gefertigt sein. Dieses Material weist eine über weite Bereiche einstellbare Biegesteifigkeit auf und neigt zu einer plastischen Verformung, die nach einem erfolgen Eingriff in den Planenaufbau erkennbar bleibt. Es kommt aber auch ein biegesteifer Kunststoff als Material für das Aussteifungselement in Frage. Dies kann beispielsweise zu Kostenvorteilen führen. Der entsprechende Kunststoff kann durch einen Eingriff in den Planenaufbau bedarfsweise ebenfalls deformieren.

Es kann alternativ oder zusätzlich ein Material für das wenigstens eine Aussteifungselement vorgesehen sein, das infolge einer entsprechenden Sprödigkeit bei einem Eingriff in den Planenaufbau zerbricht. Dazu können am Aussteifungselement Sollbruchstellen vorgesehen sein, die ein definiertes Zerbrechen sicherstellen. Auf diese Weise kann erreicht werden, dass ein zerbrochenes Aussteifungselement leicht erkannt wird, insbesondere wenn das Aussteifungselement an der Außenseite der Planeneinheit oder gar der Plane vorgesehen ist.

Die erforderliche minimale und maximale Biegesteifigkeit sowie andere Eigenschaften des Materials zur Herstellung des wenigstens einen Aussteifungselements hängen stark vom jeweiligen Einzelfall ab. Vorzugsweise wird der Eckbereich, in dem das Aussteifungselement vorgesehen ist, nennenswert ausgesteift. Das Material des Aussteifungselements kann so ausgewählt sein, dass es mit manuell handhabbaren Werkzeugen weder erheblich deformiert noch zerstört werden kann. So wird insbesondere ein Eingriff in den Planenautbau verhindert, anstatt einen erfolgten Eingriff durch eine Deformation oder Zerstörung des Aussteifungselements sichtbar zu machen.

Damit das Aussteifungselement die Funktionalität der Planeneinheit möglichst wenig behindert, ist das Aussteifungselement im Wesentlichen platten- und/oder scheibenförmig ausgebildet.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem ersten Ausführungsbeispiel des erfindungsgemäßen Planenaufbaus mit einer Planeneinheit in geschlossener Stellung in perspektivischer Ansicht,
- Fig. 2: eine Detaildarstellung des Planenaufbaus aus Fig. 1,
- Fig. 3: eine Detaildarstellung des Planenaufbaus aus Fig. 1 mit der Planeneinheit in einer geöffneten Stellung,
- Fig. 4: eine Detaildarstellung eines zweiten Ausführungsbeispiels des erfindungsgemäßen Planenaufbaus und
- Fig. 5: eine Detaildarstellung eines dritten Ausführungsbeispiels des erfindungsgemäßen Planenaufbaus.

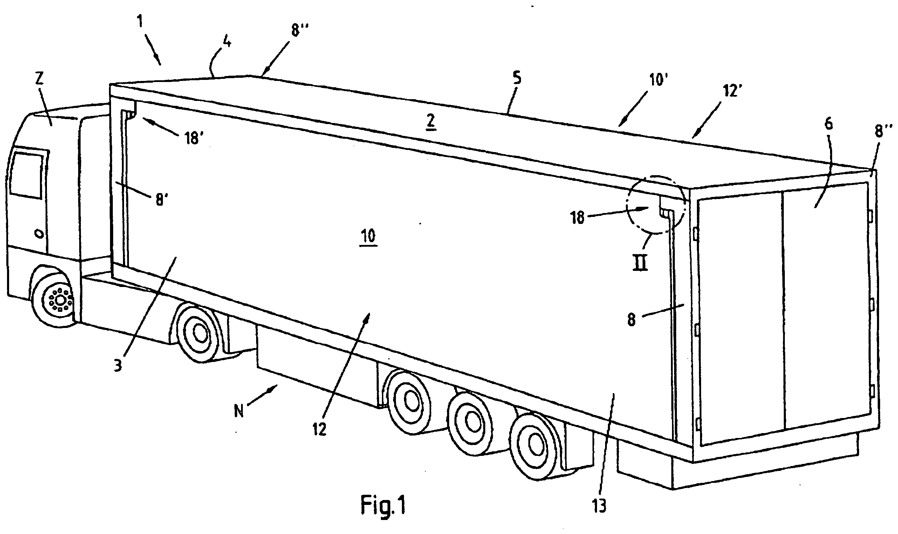

In der Fig. 1 ist ein Nutzfahrzeug N in Form eines Aufliegers zusammen mit einer Zugmaschine z dargestellt. Das Nutzfahrzeug N weist einen Planenaufbau 1 mit einem Dach 2 und vier Seitenwänden 3,4,5,6 auf. Der Planenaufbau 1. wird über eine innen liegende Rahmenkonstruktion 7 gestützt. Die Rahmenkonstruktion 7 weist an allen vier seitlichen Kanten jeweils eine Eckrunge 8,8',8" auf. Die vier Eckrungen 8,8',8" tragen das Dach 2 des Planenaufbaus 1. Das Dach 2 weist an den Längsseiten 10,10' Längsholme 11. auf.

An den beiden einander gegenüberliegenden, in Längsrichtung des Planenaufbaus 1 verlaufenden, Längsseiten 10,10' ist jeweils eine Planeneinheit 12,12' vorgesehen. Diese umfasst eine als Seitenplane ausgebildete Plane 13, welche die Öffnung 14 der Rahmenkonstruktion 7 zwischen der vorderen Eckrunge 8 und der hinteren Eckrunge 8' der entsprechenden Längsseite 10 verschließt. In dieser geschlossenen, in der Fig. 1 dargestellten, Stellung ist die Planeneinheit 12 über als Spannstangen ausgebildete Eckrungenverbindungsmittel 15 mit den Eckrungen 8,8' verbunden. Diese sind in den Eckrungen 8,8' aufgenommen, so dass die Planeneinheit 12 über die Eckrungenverbindungsmittel 15 mit den Eckrungen 8,8' verriegelt ist. In dieser Position können die Eckrungenverbindungsmittel 15 zum Aufwickeln eines Teils der Plane 13 um ihre Längsachse gedreht werden, wodurch die Plane 13 in der geschlossenen Stellung strammgezogen bzw. gespannt werden kann.

Am oberen Ende der Planeneinheit ist eine Reihe von Längshholmverbindungsmitteln 16 vorgesehen, die in etwa regelmäßigen Abständen entlang des oberen Randes 17 der Plane 13 vorgesehen sind. Die Längsholmverbindungsmittel 16 sind als Schlitten ausgebildet, die entlang des entsprechenden Längsholms 11 verschoben werden können. Zwischen den Eckrungenverbindungsmitteln 15 und den angrenzenden Längsholmverbindungsmitteln 16 ist die Plane 13 nicht an der Rahmenkonstruktion 7 befestigt. Dort, also in den Eckbereichen 18,18' zwischen dem Längsholm 11 und den Eckrungen 8,8', ist jeweils ein Aussteifungselement 19 vorgesehen.

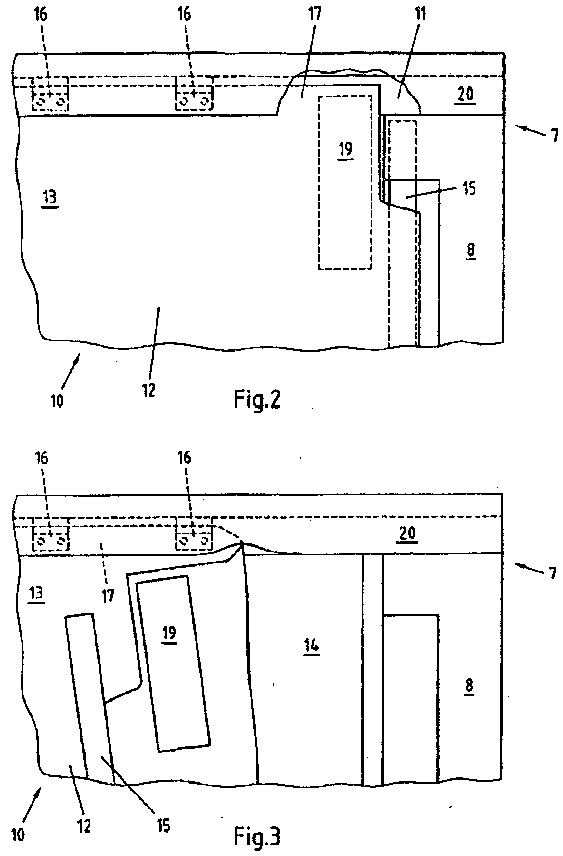

Dies ist insbesondere in der Fig. 2 dargestellt. Das Aussteifungselement 19 überlappt, von der Seite des Planenaufbaus 1 gesehen, abschnittsweise mit der Eckrunge 8 und dem Längsholm 11. Zwischen dem Eckrungenverbindungsmittel 15 und den angrenzenden Längsholmverbindungsmitteln 16 kann die Plane 13 daher nicht ohne weiteres von der Rahmenkonstruktion 7 weggezogen und durch die so entstehende Wölbung der Plane 13 in den Planenaufbau 1 eingegriffen werden.

Um in diesem Eckbereich 18 in den Planenaufbau eingreifen zu können, müsste das Aussteifungselement 19 schon zerslört oder jedenfalls verbogen werden. Beides ließe sich aber nach dem erfolgten Eingriff nicht mehr ohne weiters rückgängig machen. Folglich wäre der erfolgte Eingriff nachträglich anhand eines zerstörten oder verbogenen Aussteifungselements 19 erkennbar.

Der obere Rand 17 der Plane 13 ist beim dargestellten und insoweit bevorzugten Ausführungsbeispiel zwischen dem Längsholm 11 und einer Gummilippe 20 angeordnet. Dadurch wird verhindert, dass Wasser in den Planenaufbau 1 eindringen oder eine unbefugte Person von oben zwischen den Längsholmverbindungsmitteln 16 in den Planenaufbau 1 eingreifen kann.

Die Planeneinheit 12 gemäß der Fig. 2 ist in der Fig. 3 in geöffneter Stellung dargestellt. Beim dargestellten und insoweit bevorzugten Ausführungsbeispiel ist das Aussteifungselement 19 als Stahlblech ausgebildet und ortsfest von der Innenseite mit der Plane 13 verbunden. Diese Verbindung wird durch Verkleben in einer nicht dargestellten Tasche der Plane 13 geschaffen. Das Aussteifungselement 19 ist rechteckig ausgebildet, wobei die langen Kanten vertikal und die kurzen Kanten horizontal verlaufen. Dadurch, dass die Dimension des Aussteifungselements 19 in horizontaler Richtung geringer als in vertikaler Richtung ist, wirkt das Aussteifungselement 19 beim Öffnen der Planeneinheit 12 weniger störend.

Die beiden Eckbereiche 18,18' im Verbindungsbereich zwischen dem Längsholm 11 und den beiden Eckrungen 8,8' sind hinsichtlich ihrer konstruktiven Ausgestaltungen vergleichbar. Eine weitere Detaildarstellung von dem vorderen Eckbereich der in der Fig. 1 dargestellten Planeneinheit ist daher entbehrlich. Gleiches gilt für die analog ausgebildete Planeneinheit 12' an der gegenüberliegenden Längsseite 10' des Planenaufbaus 1.

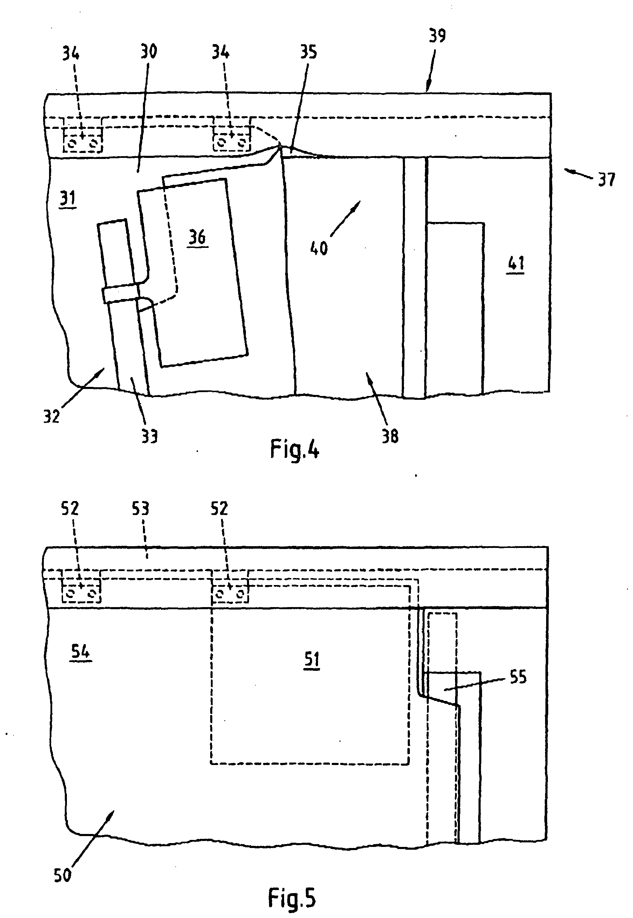

In der Fig. 4 ist ein weiteres Ausführungsbeispiel einer Planeneinheit 30 dargestellt. Auch bei diesem Ausführungsbeispiel umfasst die Planeneinheit 30 eine Plane 31, die an einem seitlichen Ende 32 ein Eckrungenverbindungsmittel 33 in Form einer Spannstange aufweist. Am oberen Rand der Plane 31 sind zudem Längsholmverbindungsmittel 34 in Form von Schlitten vorgesehen, die entlang des dargestellten Längsholms 35 verschoben werden können.

Oberhalb der Plane 31 ist am Eckrungenverbindungsmittel 33 ein Aussteifungselement 36 drehbar befestigt. Das Aussteifungselement 36 ist nicht mit der Plane 31 als solche verbunden. Da das Aussteifungselement 36 allerdings an der Innenseite der Plane 31 und drehbar am Eckrungenverbindungsmittel 33 vorgesehen ist, gelangt das Aussteifungselement 36 beim Verschließen der Seitenöffnung der Rahmenkonstruktion 37 an der Längsseite 38 des Planenaufbaus 39 durch die Planeneinheit 30 ohne weiteres Zutun in den Eckbereich 40 zwischen der angrenzenden Eckrunge 41 und dem Längsholm 35. Das dargestellte und insoweit bevorzugte Aussteifungselement 36 überlappt bei geschlossener Stellung der Planeneinheit 30 sowohl mit der angrenzenden Eckrunge 41 als auch mit dem Längsholm 35 abschnittsweise. Da die Plane 31 auch bei diesem Ausführungsbeispiel über das Eckrungenverbindungsmittel 33 gespannt wird, gelangt das Aussteifungselement 36 trotz drehbarer Lagerung nahe an den Längsholm 35 heran.

In der Fig. 5 ist ein Ausführungsbeispiel einer Planeneinheit. 50 dargestellt, bei dem das Aussteifungselement 51 an einem Längsholmverbindungsmittel 52 vorgesehen ist. Bei dem Längsholmverbindungsmittel 52 handelt es sich um einen entlang des Längsholms 53 verschiebbaren Schlitten.

Das Aussteifungselement 51 steht bei dem dargestellten und insoweit bevorzugten Ausführungsbeispiel auf der Innenseite der Plane 52 nach unten und seitlich zu dem als Spannstange ausgebildeten Eckrungenverbindungsmittel 54 vor. Dabei ist das Aussteifungselement 51 im Wesentlichen vertikal ausgerichtet, so dass das Aussteifungselement 51 beim Schließen der Planeneinheit 50 möglichst wenig stört.

## Patentansprüche

1. Planenaufbau (1,35) eines Nutzfahrzeugs (N), vorzugsweise eines Lastkraftwagens, Anhängers oder Aufliegers,
- mit einer Rahmenkonstruktion (7,37) und wenigstens einer seitlich an einer Längsseite (10,10',38) der Rahmenkonstruktion (7,37) angebrachten Planeneinheit (12,12',30,50),
- wobei die Rahmenkonstruktion (7,37) wenigstens eine Eckrunge (8,8',8",41) und wenigstens einen Längsholm (11,35,53) aufweist, die in einem Eckbereich (18,18',40) der Rahmenkonstruktion (7,37) miteinander verbunden sind,
- wobei die Planeneinheit (12,12',30,50) zwischen einer geöffneten Stellung und einer geschlossenen Stellung am Längsholm (11,35,53) gehalten ist,
- wobei die Planeneinheit (12,12',30,50) in der geschlossenen Stellung mit der Eckrunge (8,8',8",41) verbindbar ausgebildet ist,
- wobei am oberen Rand (17) der Planeneinheit (12,12',30,50) am Längsholm (11,35,53) angebrachte Längsholmverbindungsmittel (16,34,52) vorgesehen sind, und
- wobei an wenigstens einem seitlichen Ende der Planeneinheit (12,12',30,50) wenigstens ein Eckrungenverbindungsmittel (15,33,55) zur Verbindung mit der Eckrunge (8,8',8",41) vorgesehen ist,
**dadurch gekennzeichnet,**
- **dass** die Planeneinheit wenigstens ein Aussteifungselement (19,36,51) aufweist, das mit der Planeneinheit (12,12',30,50) in die geöffnete Stellung bringbar und in der geschlossenen Stellung der Planeneinheit (12,12',30,50) im Eckbereich (18,18',40) der Rahmenkonstruktion (7,37) in einem Bereich zwischen den Längsholmverbindungsmitteln (16,34,52) und dem Eckrungenverbindungsmittel (15,33,55) angeordnet ist,
- **dass** die Längsholmverbindungsmittel (16,34,52) entlang des Längsholms (11,35,53) geführte Schlitten sind,
- **dass** das Eckrungenverbindungsmittel (15,33,55) eine Spannstange ist und
- **dass** das Aussteifungselement (19,36,51) im Bereich zwischen dem äußeren Schlitten und der Spannstange vorgesehen ist.

2. Planenaufbau nach Anspruch 1,
**dadurch gekennzeichnet,**
**dass** das Aussteifungselement (19,36,51) den Längsholm (11,35,53)und/oder die Eckrunge (8,8',8",41) abschnittsweise überlappend vorgesehen ist.

3. Planenaufbau nach Anspruch 1 oder 2,
**dadurch gekennzeichnet,**
**dass** die Planeneinheit (12,12') eine Plane (13) aufweist und das Aussteifungselement (19) ortsfest an der Plane (13), insbesondere in einem Eckbereich (18,18',40) der Plane(13), befestigt ist.

4. Planenaufbau nach einem der Ansprüche 1 bis 3,
**dadurch gekennzeichnet,**
**dass** das Aussteifungselement (36) ortsfest am Eckrungenverbindungsmittel (33) befestigt ist.

5. Planenaufbau nach Anspruch 4,
**dadurch gekennzeichnet,**
**dass** das Aussteifungsmittel (36) in der geschlossenen Stellung der Planeneinheit (30), insbesondere in einem oberen Bereich, im Wesentlichen parallel zur Plane (31) seitlich vom Eckrungenverbindungsmittel (33) absteht.

6. Planenaufbau nach einem der Ansprüche 1 bis 5,
**dadurch gekennzeichnet,**
**dass** das Aussteifungselement (51) ortsfest an einem, insbesondere äußeren, Längsholmverbindungsmittel (52) befestigt ist.

7. Planenaufbau nach Anspruch 6,
**dadurch gekennzeichnet,**
**dass** das Aussteifungsmittel (51) in der geschlossenen Stellung der Planeneinheit (50) vom Längsholmverbindungsmittel (52), insbesondere im Wesentlichen parallel zur Plane (54), nach unten absteht.

8. Planenaufbau nach Anspruch 1 bis 7,
**dadurch gekennzeichnet,**
**dass** an einer Seite der Rahmenkonstruktion (7) zwei Eckrungen (8,8') vorgesehen sind, die in einander gegenüberliegenden Eckbereichen (18,18') mit dem Längsholm (11) verbunden sind,
**dass** die Planeneinheit (12) in der geschlossenen Stellung an gegenüberliegenden Enden mit den beiden Eckrungen (8,8') verbindbar ausgebildet ist und
**dass** die Planeneinheit (12) wenigstens zwei Aussteifungselemente (19) aufweist, die mit der Planeneinheit (12) in die geöffnete Stellung bringbar und in der geschlossenen Stellung der Planeneinheit (12) in dem einander gegenüberliegenden Eckbereich (18,18') der Rahmenkonstruktion (7) angeordnet sind.

9. Planenaufbau nach Anspruch 1 bis 8,
**dadurch gekennzeichnet,**
- **dass** die Rahmenkonstruktion (7) an beiden einander gegenüberliegenden Längsseiten (10,10') jeweils eine Planeneinheit (12,12'), wenigstens eine Eckrunge (8,8',8") und einen Längsholm (11) aufweist,
- **dass** jede Eckrunge (8,8',8") einer Längsseite (10,10') mit wenigstens einem Längsholm (11) in einem Eckbereich (18,18') der Rahmenkonstruktion (7) verbunden ist und
- **dass** jede Planeneinheit (12,12') wenigstens ein Aussteifungselement (19) aufweist, das mit der Planeneinheit (12,12') in die geöffnete Stellung bringbar und in der geschlossenen Stellung der Planeneinheit (12,12') im entsprechenden Eckbereich (18,18') der Rahmenkonstruktion angeordnet ist.

10. Planenaufbau nach Anspruch 1 bis 9,
**dadurch gekennzeichnet,**
**dass** das Aussteifungselement (19,36,51) aus Metall, vorzugsweise aus Blech, insbesondere aus Stahlblech, oder einem biegesteifen Kunststoff gefertigt ist.

## Claims

1. Tarpaulin cover (1, 35) of a commercial vehicle (N), preferably a truck, trailer or semi-trailer,
- with a frame construction (7, 37) and at least one tarpaulin unit (12, 12', 30, 50) attached laterally on a longitudinal side (10, 10', 38) of the frame construction (7, 37),
- wherein the frame construction (7, 37) has at least one corner stanchion (8, 8', 8", 41) and at least one longitudinal beam (11, 35, 53) which are connected to each other in a corner region (18, 18', 40) of the frame construction (7, 37),
- wherein the tarpaulin unit (12, 12', 30, 50) is held on the longitudinal beam (11, 35, 53) between an open position and a closed position,
- wherein the tarpaulin unit (12, 12', 30, 50) is designed so as to be connectable to the corner stanchion (8, 8', 8", 41) in the closed position,
- wherein on the upper edge (17) of the tarpaulin unit (12, 12', 30, 50) longitudinal beam connecting means (16, 34, 52) attached to the longitudinal beam (11, 35, 53) are provided,
and
- wherein on at least one lateral end of the tarpaulin unit (12, 12', 30, 50) at least one corner stanchion connecting means (15, 33, 55) is provided for connecting to the corner stanchion (8, 8', 8", 41)
**characterised in that**
- the tarpaulin unit has at least one bracing element (19, 36, 51) which can be brought with the tarpaulin unit (12, 12', 30, 50) into the open position and in the closed position of the tarpaulin unit (12, 12', 30, 50) is arranged in the corner region (18, 18', 40) of the frame construction (7, 37) in a region between the longitudinal beam connecting means (16, 34, 52) and the corner stanchion connecting means (15, 33, 55),
- the longitudinal beam connecting means (16, 34, 52) are slides guided along the longitudinal beam (11, 35, 53),
- the corner stanchion connecting means (15, 33, 55) is a tension rod, and
- the bracing element (19, 36, 51) is provided in the region between the outer slide and the tension rod.

2. Tarpaulin cover according to claim 1, **characterised in that** the bracing element (19, 36, 51) is provided overlapping the longitudinal beam (11, 35, 53) and/or the corner stanchion (8, 8', 8", 41) in sections.

3. Tarpaulin cover according to any one of claims 1 to 2, **characterised in that** the tarpaulin unit (12, 12') has a tarpaulin (13) and the bracing element (19) is fixedly fastened to the tarpaulin (13), in particular in one corner region (18, 18', 40) of the tarpaulin (13).

4. Tarpaulin cover according to any one of claims 1 to 3, **characterised in that** bracing element (36) is fixedly fastened to the corner stanchion connecting means (33).

5. Tarpaulin cover according to claim 4, **characterised in that** in the closed position of the tarpaulin unit (30) the bracing means (36), in particular in an upper area, protrudes laterally from the corner stanchion connecting means (33), substantially parallel to tarpaulin (31).

6. Tarpaulin cover according to any one of claims 1 to 5, **characterised in that** the bracing element (51) is fixedly fastened to an, in particular outer, longitudinal beam connecting means (52).

7. Tarpaulin cover according to claim 6, **characterised in that** in the closed position of the tarpaulin unit (50), the bracing element (51) protrudes downwards from the longitudinal beam connecting means (52), in particular substantially parallel to the tarpaulin (54).

8. Tarpaulin cover according to any one of claims 1 to 7, **characterised in that** on one side of the frame construction (7) two corner stanchions (8, 8') are provided which are connected to the longitudinal beam (11) in corner regions (18, 18') lying opposite one another, **in that** the tarpaulin unit (12) is designed so as to be connectable at opposite ends with both corner stanchions (8, 8') in the closed position and **in that** the tarpaulin unit (12) has at least two bracing elements (19) which can be brought with the tarpaulin unit (12) into the open position and in the closed position of the tarpaulin unit (12) are arranged in the corner region (18, 18') of the frame construction (7) lying opposite one another.

9. Tarpaulin cover according to any one of claims 1 to 8, **characterised in that**
- on both longitudinal sides (10, 10') lying opposite one another, the frame construction (7) has in each case one tarpaulin unit (12, 12'), at least one corner stanchion (8, 8', 8") and a longitudinal beam (11),
- each corner stanchion (8, 8', 8") of a longitudinal side (10, 10') is connected to at least one longitudinal beam (11) in a corner region (18, 18') of the frame construction (7) and
- each tarpaulin unit (12, 12') has at least one bracing element (19) which can be brought with the tarpaulin unit (12, 12') into the open position and in the closed position of the tarpaulin unit (12, 12') is arranged in the corresponding corner region (18, 18') of the frame construction.

10. Tarpaulin cover according to any one of claims 1 to 9, **characterised in that** the bracing element (19, 36, 51) is made of metal, preferably sheet metal, in particular sheet steel, or of a rigid plastic.

## Revendications

1. Benne bâchée (1, 35) d'un véhicule utilitaire (N), de préférence d'un poids lourd, d'une remorque ou d'une semi-remorque,
- comportant une construction de châssis (7, 37) et au moins une unité de bâche (12, 12', 30, 50) montée latéralement sur un côté longitudinal (10, 10', 38) de la construction de châssis (7, 37),
- dans lequel la construction de châssis (7, 37) présente au moins un montant d'angle (8, 8', 8", 41) et au moins un longeron (11, 35, 53), qui sont reliés l'un à l'autre dans une zone de coin (18, 18', 40) de la construction de châssis (7, 37),
- dans lequel l'unité de bâche (12, 12', 30, 50) est maintenue entre une position ouverte et une position fermée sur le longeron (11, 35, 53),
- dans lequel l'unité de bâche (12, 12', 30, 50) est conçue de manière à pouvoir être reliée dans la position fermée au montant d'angle (8, 8', 8", 41),
- dans lequel sur le bord supérieur (17) de l'unité de bâche (12, 12', 30, 50) des moyens de liaison de longeron (16, 34, 52) montés sur le longeron (11, 35, 53) sont prévus, et
- dans lequel sur au moins une extrémité latérale de l'unité de bâche (12, 12', 30, 50) au moins un moyen de liaison de montant d'angle (15, 33, 35) est prévu à des fins de liaison avec le montant d'angle (8, 8', 8", 41),
**caractérisée en ce que**
- l'unité de bâche présente au moins un élément de renfort (19, 36, 51), qui peut être amené avec l'unité de bâche (12, 12', 30, 50) dans la position ouverte et est disposé dans la position fermée de l'unité de bâche (12, 12', 30, 50) dans la zone de coin (18, 18', 40) de la construction de châssis (7, 37) dans une zone entre les moyens de liaison de longeron (16, 34, 52) et le moyen de liaison de montant d'angle (15, 33, 55),
- les moyens de liaison de longeron (16, 34, 52) sont des chariots guidés le long du longeron (11, 35, 53),
- le moyen de liaison de montant d'angle (15, 33, 55) est une barre de tension et
- l'élément de renfort (19, 36, 51) est prévu dans la zone entre le chariot externe et la barre de tension.

2. Benne bâchée selon la revendication 1,
**caractérisée en ce que**
l'élément de renfort (19, 36, 51) est prévu de manière à chevaucher par sections le longeron (11, 35, 53) et/ou le montant d'angle (8, 8', 8", 41).

3. Benne bâchée selon une des revendications 1 à 2,
**caractérisée en ce que**
l'unité de bâche (12, 12') présente une bâche (13) et l'élément de renfort (19) est fixé de manière stationnaire sur la bâche (13), notamment dans une zone de coin (18, 18', 40) de la bâche (13).

4. Benne bâchée selon une des revendications 1 à 3,
**caractérisée en ce que**
l'élément de renfort (36) est fixé de manière stationnaire sur le moyen de liaison de montant d'angle (33).

5. Benne bâchée selon la revendication 4,
**caractérisée en ce que**
le moyen de renfort (36) dépasse dans la position fermée de l'unité de bâche (30), notamment dans une zone supérieure, essentiellement parallèlement à la bâche (31) latéralement depuis le moyen de liaison de montant d'angle (33) .

6. Benne bâchée selon une des revendications 1 à 5,
**caractérisée en ce que**
l'élément de renfort (51) est fixé de manière stationnaire sur un moyen de liaison de longeron (52), notamment extérieur.

7. Benne bâchée selon la revendication 6,
**caractérisée en ce que**
le moyen de renfort (51) dans la position fermée de l'unité de bâche (50) dépasse vers le bas depuis les moyens de liaison de longeron (52), notamment essentiellement parallèlement à la bâche (54).

8. Benne bâchée selon revendication 1 à 7,
**caractérisée en ce que**
sur un côté de la construction de châssis (7) deux montants d'angle (8, 8') sont prévus, qui sont reliés dans des zones de coins (18, 18') en vis-à-vis l'une de l'autre avec le longeron (11), **en ce que** l'unité de bâche (12) dans la position fermée est conçue de manière à pouvoir être reliée aux extrémités en vis-à-vis avec les deux montants d'angle (8, 8') et
**en ce que** l'unité de bâche (12) présente au moins deux éléments de renfort (19), qui peuvent être amenés avec l'unité de bâche (12) dans la position ouverte et sont disposés dans la position fermée de l'unité de bâche (12) dans la zone de coin (18, 18') en vis-à-vis de la construction de châssis (7).

9. Benne bâchée selon revendication 1 à 8,
**caractérisée en ce que**
- la construction de châssis (7) sur les deux côtés longitudinaux (10, 10') en vis-à-vis présente respectivement une unité de bâche (12, 12'), au moins un montant d'angle (8, 8', 8") et un longeron (11),
- chaque montant d'angle (8, 8', 8") d'un côté longitudinal (10, 10') est reliée avec au moins un longeron (11) dans une zone de coin (18, 18') de la construction de châssis (7) et
- chaque unité de bâche (12, 12') présente au moins un élément de renfort (19), qui peut être amené avec l'unité de bâche (12, 12') dans la position ouverte et est disposé dans la position fermée de l'unité de bâche (12, 12') dans une zone de coin correspondante (18, 18') de la construction de châssis.

10. Benne bâchée selon revendication 1 à 9,
**caractérisée en ce que**
l'élément de renfort (19, 36, 51) est fabriqué en métal, de préférence en tôle, notamment en tôle d'acier, ou un plastique résistant à la flexion.
